# EUROPEAN PATENT APPLICATION

(11) **EP 4 071 397 A1**
(43) Date of publication of application: **12.10.2022**
(21) Application number: 21167509.5
(22) Date of filing: 08.04.2021
(51) Int. Cl.: F16M 11/04, F16M 13/04, F16M 11/20, F16M 11/24, F16M 11/10, F16M 11/14, F16M 11/28

(54) **FREELY ROTATABLE AND TELESCOPIC INTELLIGENT ARM**

(71) Applicant: Dongguan City Kaihua Electronics Co., Ltd, Dongguan, Guangdong 523710 (CN)
(72) Inventor: WU, Fuxi, Dongguan, 523710 (CN); WU, QuZhang, Dongguan, 523710 (CN)
(74) Representative: Ipey

(57) **Abstract**

The invention discloses a freely rotatable and telescopic intelligent arm comprising a base, a telescopic joint assembly arranged on the base, an adjustable clamp rotatably connected to the telescopic joint assembly, and a fixing device arranged on the base, wherein the telescopic joint assembly comprises at least two joint sets, and two adjacent joint sets are rotatably connected. The freely rotatable and telescopic intelligent arm can be fixed on any part of the human body, and has the functions of being freely telescopic, swinging, spinning and rotating, which not only releases the support of a human hand on a mobile terminal (mobile phone), relieves the pressure on the arm, eliminates the sore sense of holding the mobile terminal (mobile phone) for a long time, but also enables a user to obtain more appropriate watching and operating directions and angles. The convenience for the user to use and operate the mobile terminal (mobile phone) is greatly improved.

## Description

### Technical Field

The invention relates to a freely rotatable and telescopic intelligent arm.

### Background Art

Smart phone has become an indispensable object in people's life. People not only use the mobile phone to get contact with other people, but also use it to watch videos, read novels, play games and so on. When people use the mobile phone to watch videos, read novels, play games and so on, the mobile phone needs to be held for a long time. In particular, when people go out, the mobile phone cannot be positioned any where at any time, and the arm feels sore after the mobile phone is used for a long time.

Therefore, under the condition that no external object supports the mobile phone, there is no way to solve the problem of sore arm due to the hand-held mobile phone arm for a long time.

### Summary of the Invention

For the defects above, the invention aims to provide an freely rotatable and telescopic intelligent arm which can be fixed on any part of the human body, and has the functions of being freely telescopic, swinging, spinning and rotating, which not only releases the support of a human hand on a mobile terminal (mobile phone), relieves the pressure on the arm, eliminates the sore sense of holding the mobile terminal (mobile phone) for a long time, but also enables a user to obtain more appropriate watching and operating directions and angles. The convenience for the user to use and operate the mobile terminal (mobile phone) is greatly improved.

The technical solution adopted by the invention for achieving the above purpose is as follows.

A freely rotatable and telescopic intelligent arm is characterized by comprising a base, a telescopic joint assembly arranged on the base, an adjustable clamp rotatably connected to the telescopic joint assembly, and a fixing device arranged on the base, wherein the telescopic joint assembly comprises at least two joint sets, and two adjacent joint sets are rotatably connected.

As a further improvement of the invention, the two adjacent joint sets are connected by a rotating assembly, an end of one joint set of the two joint sets is provided with a U-shaped avoiding slot, and both sides of the U-shaped avoiding slot are respectively formed with a connecting arm; the rotating assembly comprises a pin connected between the connecting arms at the both sides of the U-shaped avoiding slot, and a rotating connection piece sleeved at the periphery of the pin, wherein the rotating connection piece mainly consists of an upper connecting shaft embedded in the U-shaped avoiding slot and sleeved at the periphery of the pin, a connecting turntable formed at a lower end of the upper connecting shaft, and the connecting turntable is rotatably connected to an end of the other joint set of the two joint sets.

As a further improvement of the present invention, the two joint sets comprise a lower joint set and an upper joint set rotatably connected to an upper end of the lower joint set, and the adjustable clamp is arranged on the upper joint set.

As a further improvement of the invention, a side clamping slot for clamping the lower joint set is provided in a side edge of the base, and a cavity penetrating to the outer surface of the base is communicated and arranged at a lower part of the side clamping slot; the lower end of the lower joint set is connected with a swinging connection piece movably embedded in the cavity, the swinging connection piece mainly consists of a circular connecting head movably embedded in the cavity and a connecting column connected between the circular connecting head and the lower end of the lower joint set, and a connecting clamping slot for embedding and swinging the connecting column is formed between the lower part of the side clamping slot and the cavity.

As a further improvement of the invention, the adjustable clamp mainly consists of a lower clamping plate and an upper clamping part arranged at an upper end of the lower clamping plate, wherein the lower clamping plate and the upper clamping part are combined to form a clamping position; at least one adjusting assembly is connected between the lower clamping plate and the upper clamping part, and comprises an adjusting rod, a spring and a lower limiting piece, wherein the adjusting rod is positioned between the lower clamping plate and the upper clamping part and has an upper end limited in the upper clamping part, the spring is sleeved at the periphery of the adjusting rod, and the lower limiting piece is connected to a lower end of the adjusting rod and abuts against a lower end of the spring; an upper limiting piece abutting against an upper end of the spring is convexly arranged in the lower clamping plate; a strip-shaped sliding slot in which the adjusting rod and the spring are embedded is formed in the lower clamping plate; the upper limiting piece is an arc-shaped protrusion arranged on an inner wall of an upper part of the strip-shaped sliding slot, and the arc-shaped protrusion is sleeved at the periphery of the adjusting rod and is positioned at the upper end of the spring; the lower limiting piece is a lower nut threadedly connected with a lower end of the adjusting rod; two supporting clamping blocks are convexly arranged in the upper clamping part, and a clamping slot for clamping the adjusting rod is respectively formed in the two supporting clamping blocks; and a limiting nut and an upper nut are threadedly connected with the adjusting rod, the limiting nut is positioned between the two supporting clamping blocks, and the upper nut is threadedly connected with the upper end part of the adjusting rod.

As a further improvement of the invention, a rotating chassis is arranged on an end face, close to the adjustable clamp, of the upper joint set, and a meshed rotating shaft meshed with the rotating chassis is convexly arranged in the adjustable clamp; and a rear annular gear tooth is formed on the rotating chassis, and a front annular gear tooth meshed with the rear annular gear tooth is formed on the meshed rotating shaft.

As a further improvement of the invention, the upper joint set is provided with a strip-shaped groove on an end face, close to the adjustable clamp, of the upper joint set, a stopper is arranged on a lower part of the strip-shaped groove, a sliding bottom block connected to the stopper is arranged on an upper part of the strip-shaped groove, and a sliding slot is formed on the sliding bottom block, forming a strip-shaped clamping strip on both sides of the sliding slot respectively; and the both side edges of the rotating chassis are respectively formed with a clamping slot for clamping the strip-shaped clamping strip.

As a further improvement of the invention, a plurality of middle joint sets are further rotatably connected between the lower joint set and the upper joint set; and the upper joint set, the middle joint set and the lower joint set are respectively connected in a telescopic manner by a plurality of joints.

As a further improvement of the present invention, the fixing device is a snap-on strap, a magic tape strap or a suction cup.

As a further improvement of the invention, a power supply device is arranged in the base, and a charging line of the power supply device sequentially penetrates through the base and the telescopic joint assembly, so that a charging plug of the charging line is exposed outside an upper part of the telescopic joint assembly.

As a further improvement of the invention, an earphone is arranged on the base, a through hole is formed in the base, and one end of an earphone cable of the earphone sequentially penetrates through the base and the telescopic joint assembly, so that a connecting plug of the earphone is exposed outside the upper part of the telescopic joint assembly; and the other end of the earphone cable of the earphone penetrates through the through hole so that an earplug of the earphone is exposed outside the base.

The invention has the following beneficial effects.
(1) The whole intelligent arm can be fixed on any part of the human body by the fixing device, and the mobile terminal (mobile phone) is clamped on the adjustable clamp at the same time. As the adjustable clamp can rotate freely relative to the telescopic joint assembly which has the functions of being freely telescopic, swinging, spinning and rotating, it not only releases the support of a human hand on a mobile terminal (mobile phone), relieves the pressure on the arm, eliminates the sore sense of holding the mobile terminal (mobile phone) for a long time, but also enables a user to obtain more appropriate watching and operating directions and angles. It is convenient to store and carry the whole intelligent arm, and the convenience for the user to use and operate the mobile terminal (mobile phone) is greatly improved.
(2) The power supply device is stored in the base, and the charging line is stored in the telescopic joint assembly, so that the charging plug is exposed outside the upper part of the telescopic joint assembly. When the mobile terminal (mobile phone) needs to be charged, the mobile terminal (mobile phone) can be charged without an additional power supply device and the charging line, and great convenience is brought to charging and using of the mobile terminal (mobile phone). Moreover, the normal use of the intelligent arm is not affected in the charging process.
(3) The earphone cable is stored in the intelligent arm, and the connecting plug of the earphone cable is exposed outside the upper part of the telescopic joint assembly, so that the connecting plug can be inserted into the mobile terminal (mobile phone). Meanwhile, the earplug is exposed outside the base, a user can conveniently wear the earplug into the ear, the combined use of the earphone and the mobile terminal (mobile phone) can be realized, and great convenience is brought to the use of the mobile terminal (mobile phone). Moreover, the normal use of the intelligent arm is not affected during the use of the earphone.

The above is an overview of the technical scheme of the invention. The following is a further explanation of the invention in combination with the attached drawings and specific implementations.

### Brief Description of the Drawings

Fig. 1 is a structurally schematic view according to Embodiment 1;
Fig. 2 is a structurally schematic view of an telescopic joint assembly combined with an adjustable clamp according to the Embodiment 1;
Fig. 3 is a schematic view showing an overall structure of a joint set formed by two joints according to the Embodiment 1;
Fig. 4 is a structurally schematic view of a base combined with a lower joint set according to the Embodiment 1;
Fig. 5 is a structurally schematic view of the base according to the Embodiment 1;
Fig. 6 is a structurally schematic view of a intelligent arm is in an integrally contracted state according to the Embodiment 1;
Fig. 7 is a structurally schematic view of the adjustable clamp rotated to a side close to the base according to the Embodiment 1;
Fig. 8 is a schematic view showing an overall structure of the adjustable clamp according to the Embodiment 1;
Fig. 9 is a schematic view showing a part of the structure of the adjustable clamp according to the Embodiment 1;
Fig. 10 is a structurally schematic view of an upper joint set according to the Embodiment 1;
Fig. 11 is a structurally schematic view of the adjustable clamp rotated to be in a vertical state with the upper joint set according to the Embodiment 1;
Fig. 12 is a front view showing a structure in which the adjustable clamp rotates to a side close to the base, and the adjustable clamp and the upper joint set are in a vertical state;
Fig. 13 is a back view showing a structure in which the adjustable clamp rotates to a side close to the base, and the adjustable clamp and the upper joint set are in a vertical state;
Fig. 14 is a structurally schematic view of Embodiment 2;
Fig. 15 is a structurally schematic view of Embodiment 3.

### Detailed Description of the Invention

In order to further explain the technical means and effects of the present invention for achieving the intended purpose, the following detailed description of the embodiments of the present invention will be made with reference to the accompanying drawings and preferred embodiments.

### Embodiment 1

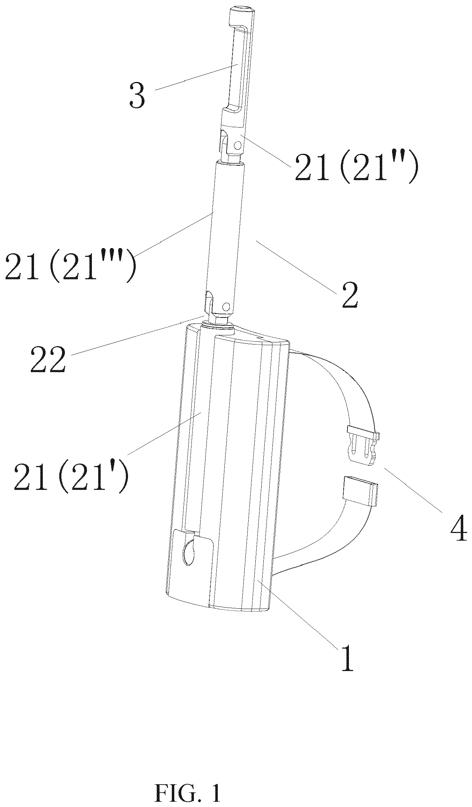

Referring to Fig. 1, the embodiment provides a freely rotatable and telescopic intelligent arm comprising a base 1, a telescopic joint assembly 2 arranged on the base 1, an adjustable clamp 3 rotatably connected to the telescopic joint assembly 2, and a fixing device 4 arranged on the base 1, wherein the telescopic joint assembly 2 comprises at least two joint sets 21, and the two adjacent joint sets 21 are rotatably connected.

The intelligent arm provided by the embodiment is tied to any part of a human body by the fixing device 4, preferably can be tied to the arm, and can be used as a third arm of the human body. Meanwhile, the mobile terminal (such as a mobile phone) is clamped on the adjustable clamp 3. The adjustable clamp 3 can freely rotate relative to the telescopic joint assembly 2, and the telescopic joint assembly 2 has the functions of being freely telescopic and rotating, so that it not only releases the support of a human hand on a mobile terminal, but also a user can obtain proper watching and operating directions and angles. The convenience for the user to use and operate the mobile terminal (mobile phone) is greatly improved.

The specific structure of the fixing device 4 can be set according to specific needs. In the present embodiment, the fixing device 4 is a snap-on strap, a magic tape strap or a suction cup, but other fixing structures are also possible as long as the intelligent arm can be fixed at a certain position on the body or fixed/placed on objects (e.g., a table, a chair, etc.) other than the human body. For example, when the fixing device 4 is a snap-on strap or a magic tape strap, as shown in Fig. 1, the intelligent arm can be tied to the arm by the fixing device 4 and can be used as the third hand of a person. When the fixing device 4 is of a structure such as a suction cup, a magnet and the like, the intelligent arm can be fixed on an object such as a table by the fixing device 4.

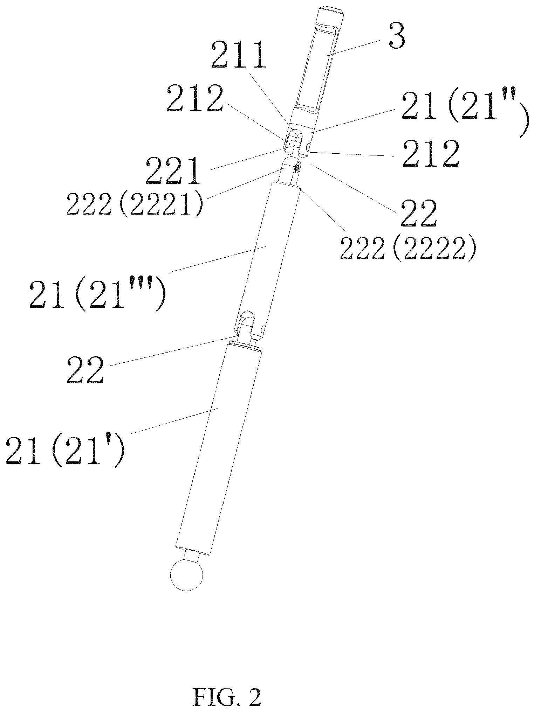

In the embodiment, as shown in Fig. 2, the two adjacent joint sets 21 are connected by a rotating assembly 22, an end of one joint set of the two joint sets 21 is provided with a U-shaped avoiding slot 211, and both sides of the U-shaped avoiding slot 211 are respectively provided with a connecting arm 212; the rotating assembly 22 comprises a pin 221 connected between the connecting arms 212 at both sides of the U-shaped avoiding slot 211, and a rotating connection piece 222 sleeved at the periphery of the pin 221, wherein the rotating connection piece 222 mainly consists of an upper connecting shaft 2221 embedded in the U-shaped avoiding slot 211 and sleeved at the periphery of the pin 221, a connecting turntable 2222 formed at a lower end of the upper connecting shaft 2221, and the connecting turntable 2222 is rotatably connected to an end of the other joint set of the two joint sets 21.

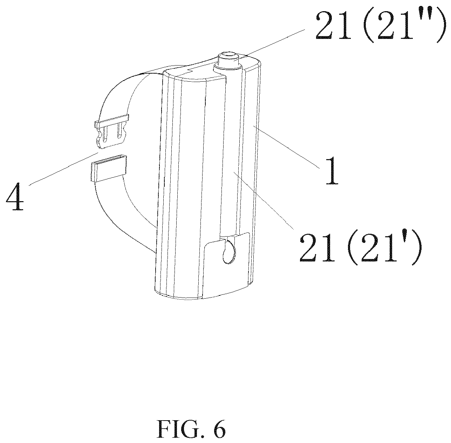

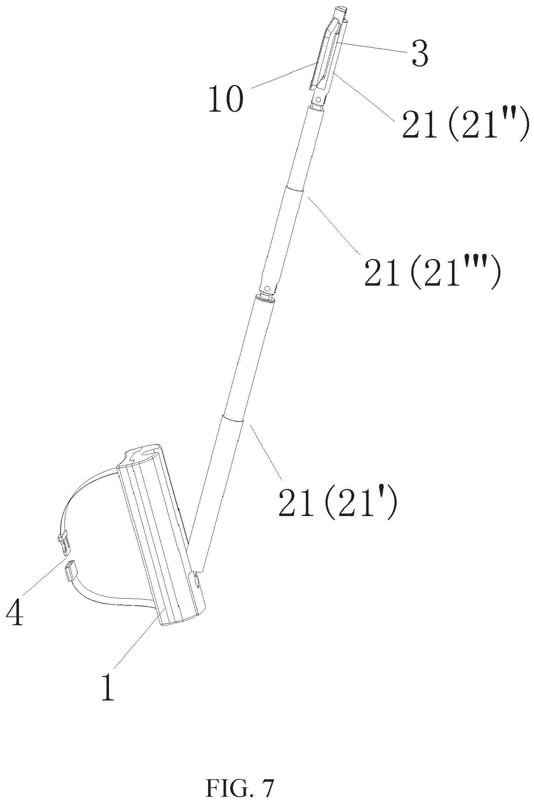

According to the embodiment, the pin 221 of the rotating assembly 22 is matched with the rotating connection piece 222, so that the two adjacent joint sets 21 can rotate according to specific requirements. For example, the upper joint set 21 can swing downwards, a certain angle is formed between the two adjacent joint sets 21. After the mobile phone is clamped on the adjustable clamp 3, a user can obtain more appropriate watching and operating angles and directions, and it is convenient to use the mobile phone. Meanwhile, the connecting turntable 2222 is rotatably connected to an end part of the joint set, the connecting turntable 2222 can drive the upper joint set to rotate 360°, that is, the joint set below is taken as a reference for the joint set above to make a spinning movement, so that the adjustable clamp 3 can be conveniently rotated to a required direction, and as shown in Fig. 7, the adjustable clamp 3 is rotated to a side close to the base. Meanwhile, the connecting turntable 2222 in the embodiment can be retracted into the joint set 21, so that the upper joint set 21 can be integrally retracted into the lower joint set 21. That is, the telescopic joint assembly 2 can be extended or shortened, and the length of the telescopic joint assembly 2 can be adjusted. When the telescopic joint assembly 2 is retracted to the shortest, the telescopic joint assembly 2 and the adjustable clamp 3 are integrally stored in the base 1, as shown in Fig. 6. When the intelligent arm is not used, the intelligent arm can be conveniently stored and carried, for example, in a pocket or a bag, and the temporary use space is small.

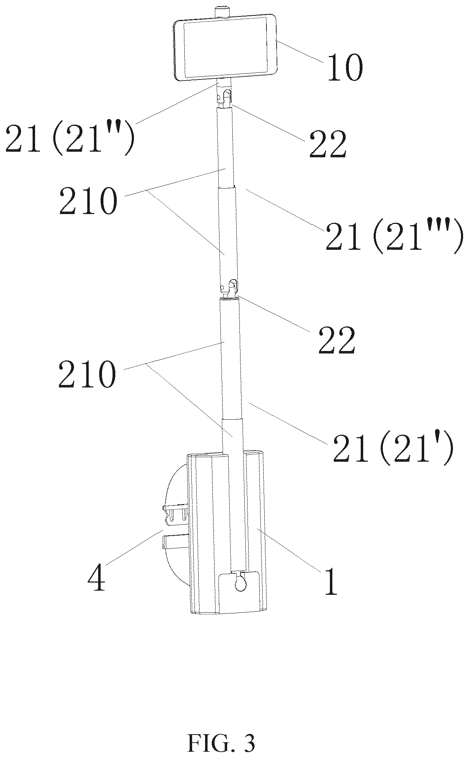

In this embodiment, the two joint sets 21 comprise a lower joint set 21', and an upper joint set 21" rotatably connected to an upper end of the lower joint set 21', and the adjustable clamp 3 is arranged on the upper joint set 21". Of course, a plurality of middle joint sets 21" are also rotatably connected between the lower joint set 21' and the upper joint set 21", as shown in Figs. 1 and 2. Also, the upper joint set 21", the middle joint set 21''', and the lower joint set 21' are telescopically connected by a plurality of joints 210, respectively, as shown in Fig. 3. The upper joint set 21" consists of one joint, and the middle joint set 21''' and the lower joint set 21' consist of two joints, respectively. However, the telescopic connection structure between the joint 210 and the joint 210 is a conventional structure as long as the two joints 210 are telescopic.

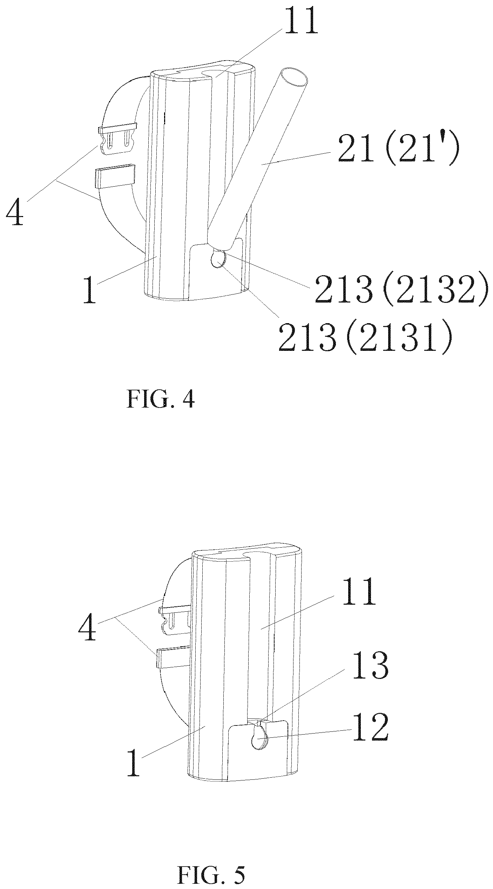

In the embodiment, as shown in Figs. 4 and 5, a side clamping slot 11 for clamping the lower joint set 21' is provided in a side edge of the base 1, and a cavity 12 penetrating to the outer surface of the base 1 is communicated and arranged at a lower part of the side clamping slot 11; the lower end of the lower joint set 21' is connected with a swinging connection piece 213 movably embedded in the cavity 12, the swinging connection piece 213 mainly consists of a circular connecting head 2131 movably embedded in the cavity 12 and a connecting column 2132 connected between the circular connecting head 2131 and the lower end of the lower joint set 21', and a connecting clamping slot 13 for embedding and swinging the connecting column 2132 is formed between the lower part of the side clamping slot 11 and the cavity 12. Since the swinging connection piece 213 is movable within the cavity 12, i.e., the swinging connection piece 213 is free to swing within the cavity 12, in general, the lower joint set 21' is clamped into the side clamping slot 11. When it is desired to swing the lower joint set 21' for better viewing and operating directions and angles, only the lower joint set 21' is swung outward. The circular connecting head 2131 of the swinging connection piece 213 is movable within the cavity 12. Therefore, when the intelligent arm is retracted to a shortest state, the upper joint set 21", the middle joint set 21''' and the adjustable clamp 3 are all retracted into the lower joint set 21', and the lower joint set 21' is stored in the side clamping slot 11 of the base 1, as shown in Fig. 6.

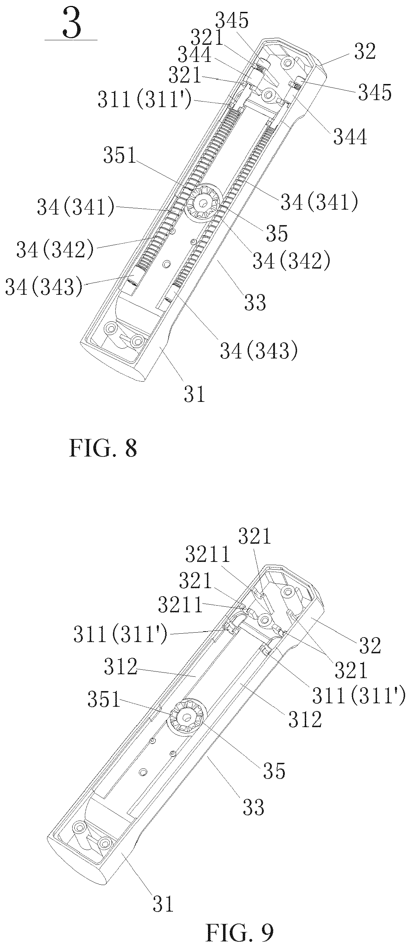

As shown in Figs. 8 and 9, the adjustable clamp 3 of the embodiment mainly consists of a lower clamping plate 31 and an upper clamping part 32 arranged at an upper end of the lower clamping plate 31, wherein the lower clamping plate 31 and the upper clamping part 32 are combined to form a clamping position 33, and the mobile terminal (the mobile phone 10) is clamped in the clamping position 33. Because different brands and models of mobile phones 10 have different sizes, the clamping position 33 on the adjustable clamp 3 needs to be provided with an adjustable structure. Specifically, at least one adjusting assembly 34 is connected between the lower clamping plate 31 and the upper clamping part 32. In this embodiment, the adjusting assemblies 34 are in two groups. Specifically, the adjusting assembly 34 comprises an adjusting rod 341, a spring 342 and a lower limiting piece 343, wherein an adjusting rod 341 is positioned between the lower clamping plate 31 and the upper clamping part 32 and having an upper end limited in the upper clamping part 32, the spring 342 is sleeved at the periphery of the adjusting rod 341, and the lower limiting piece 343 is connected to a lower end of the adjusting rod 341 and abuts against the lower end of the spring 342. In this embodiment, the lower limiting piece 343 is a lower nut threadedly connected with a lower end of the adjusting rod 341; and an upper limiting piece 311 abutting against an upper end of the spring 342 is convexly arranged in the lower clamping plate 31. When the size of the mobile phone 10 to be held is large, the upper clamping part 32 can be pulled up to lengthen the clamping position 33. When the upper clamping part 32 is pulled upwards, the adjusting rod 341 and the lower limiting piece 343 are driven to move upwards, and then the spring 342 is compressed; after the mobile phone 10 is clamped on the clamping position 33, and the pulling force to the upper clamping part 32 is released, the elastic restoring force of the spring 342 applies downward force to the adjusting rod 341, and the adjusting rod 341 also applies the downward force to the upper clamping part 32; and the upper clamping part 32 applies the clamping force to the mobile phone 10, so that the mobile phone 10 is firmly clamped in the clamping position 33 and cannot fall off.

In order to enable the adjusting rod 341 of the adjusting assembly 34 to move in a straight line, the present embodiment forms a strip-shaped sliding slot 312 in the lower clamping plate 31 into which the adjusting rod 341 and the spring 342 are embedded, ensuring that the adjusting rod 341 does not move in an offset manner. Meanwhile, the upper limiting piece 311 is an arc-shaped protrusion 311' arranged on an inner wall of an upper part of the strip-shaped sliding slot 312, and the arc-shaped protrusion 311' is sleeved at the periphery of the adjusting rod 341 and is positioned at the upper end of the spring 342; and the upper end of the spring 342 is limited by the arc-shaped protrusion 311', so that the spring 342 can move within a certain range without exceeding the arc-shaped protrusion 311'.

According to the embodiment, the upper end of the adjusting rod 341 is limited. Specifically, two supporting clamping blocks 321 are convexly arranged in the upper clamping part 32, and a clamping slot 321 for clamping the adjusting rod 341 is respectively formed in the two supporting clamping blocks 321; meanwhile, a limiting nut 344 and an upper nut 321 are threadedly connected with the adjusting rod 341, the limit nut 344 is positioned between the two support blocks 321, and the upper nut 345 is threadedly connected with the upper end of the adjusting rod 341.

The adjustable clamp 3 in the embodiment not only has the function of adjusting the length of the clamping position 33 so as to adapt to mobile phones 10 with different sizes, but also has the function of rotating so as to obtain a more suitable watching and operating angles and meet different requirements of different users.

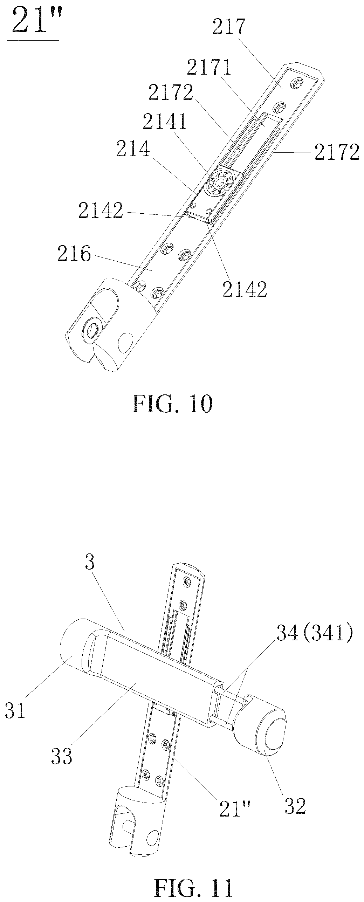

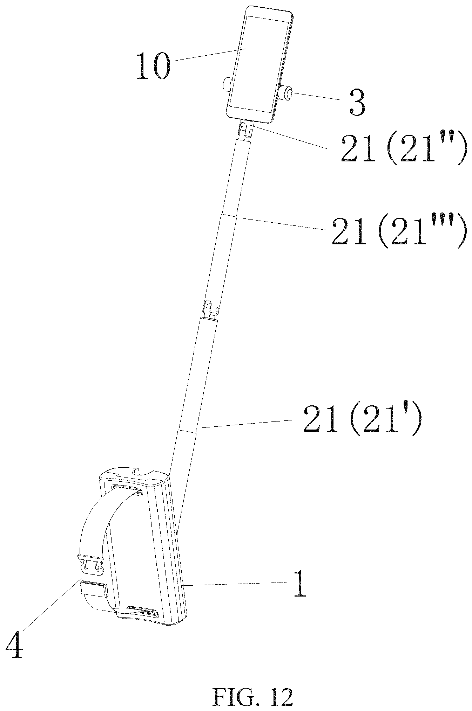

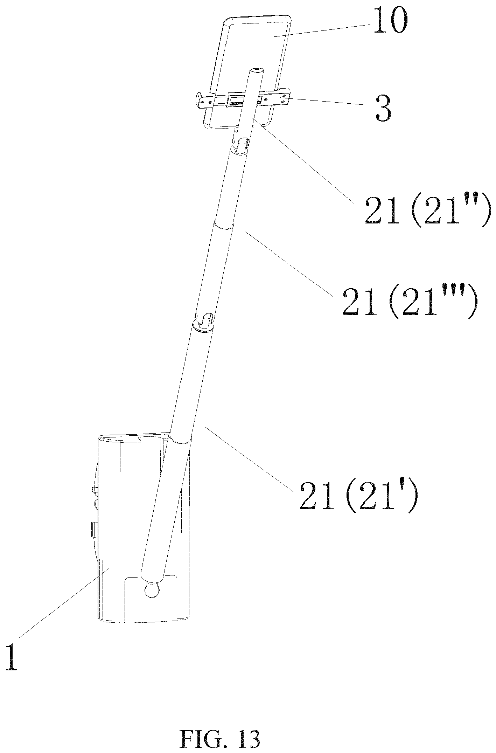

Specifically, as shown in Fig. 10, and in the present embodiment, a rotating chassis 214 is arranged on an end face, close to the adjustable clamp 3, of the upper joint set 21", and a meshed rotating shaft 35 meshed with the rotating chassis 214 is convexly arranged in the adjustable clamp 3, as shown in Figs. 8 and 9; a rear ring gear tooth 2141 is formed on the rotating chassis 214, and a front ring gear tooth 351 meshed with the rear ring gear tooth 2141 is formed on the meshed rotating shaft 35. By means of the intermeshed front ring gear tooth 351 and rear ring gear tooth 2141, it is achieved that the adjustable clamp 3 is rotated at any angle with respect to the upper joint set 21" as a reference, as shown in Figs. 11 to 13; and the adjustable clamp 3 is rotated to be perpendicular to the upper joint set 21 ". Specifically, when the adjustable jig 3 is rotated, the meshed rotating shaft 35 rotates along with the same, and the front ring gear tooth 351 slides on the rear ring gear tooth 2141, thereby realizing the rotation of the adjustable jig 3.

Meanwhile, as shown in Fig. 10, a strip-shaped groove is provided at an end face, close to the adjustable clamp 3, of the upper joint set 21", a stopper 216 is arranged on a lower part of the strip-shaped groove, a sliding bottom block 217 connected to the stopper 216 is arranged on an upper part of the strip-shaped groove, and a sliding slot 217 is formed on the sliding bottom block 217, forming a strip-shaped clamping strip 217 on both sides of the sliding slot 2171 respectively; and the both side edges of the rotating chassis 214 are respectively formed with a clamping slot 2142 for clamping the strip-shaped clamping strip 2172.

### Embodiment 2

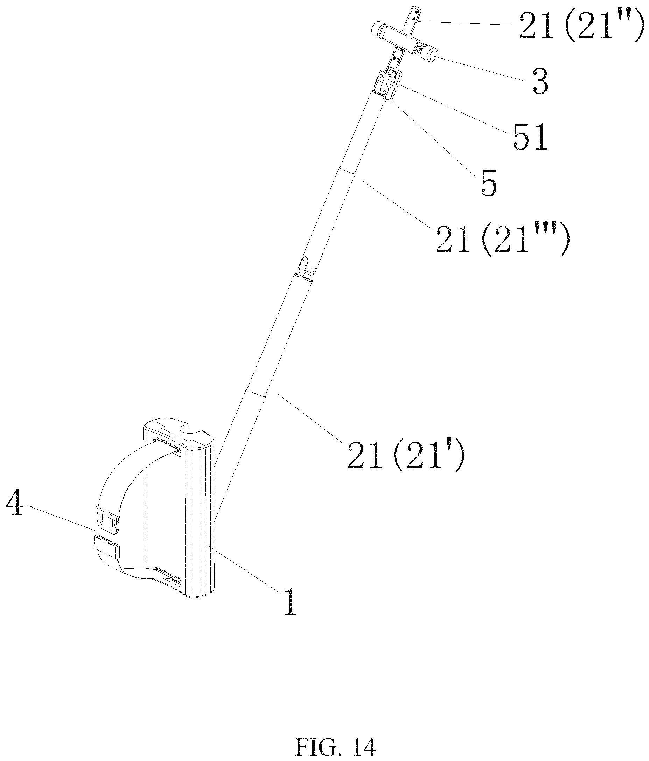

As shown in Fig. 14, in the present embodiment, a power supply device (not shown) is arranged in the base 1. Specifically, the power supply device may be a rechargeable battery, a portable power supply, etc. The charging line 51 of the power supply device sequentially penetrates through the base 1 and the telescopic joint assembly 2, so that the charging plug 51 of the charging line 5 is exposed outside the upper part of the telescopic joint assembly 2. In the present embodiment, it is preferable that the upper end of the charging line 5 penetrates from any position on the upper joint set 21", so that the charging plug 51 is exposed outside the upper joint set 21" and easily inserted into the mobile phone 10. When the mobile phone 10 is clamped on the adjustable clamp 3, the charging plug 51 is directly inserted onto the mobile phone 10 to charge the same.

Generally, when the electric quantity of the mobile phone is insufficient, an additional power supply device and a charging line need to be found to charge the mobile phone 10. Sometimes, the power supply device cannot be found in time to charge the mobile phone 10. Normal use of the mobile phone 10 can be affected, great inconvenience is brought to a user, the power supply device and the charging line occupy space, and the phenomenon that the charging line is disordered often occurs. In the embodiment, the power supply device is stored in the base 1, and the charging line 5 is stored in the telescopic joint assembly 2. When the mobile phone 10 needs to be charged, the mobile phone can be charged without the additional power supply device and the charging line, bringing great convenience to the use, and without affecting the normal use of the intelligent arm in the charging process.

### Embodiment 3

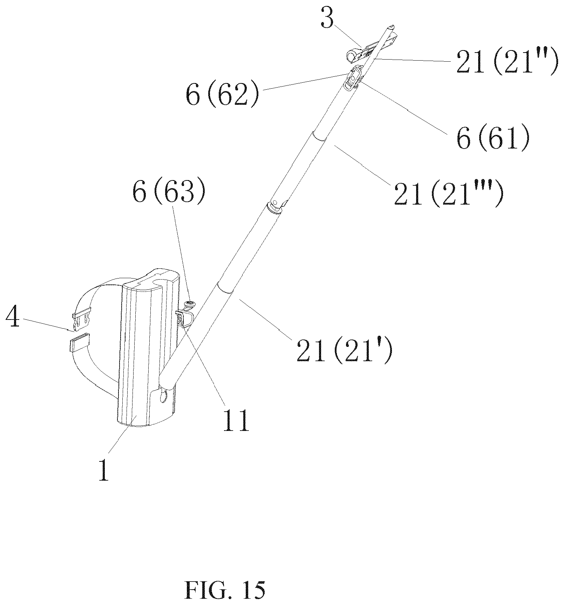

As shown in Fig. 15, an earphone 6 is arranged on the base 1 in the embodiment, a through hole 11 is formed in the base 1, and one end of an earphone cable 61 of the earphone 6 sequentially penetrates through the base 1 and the telescopic joint assembly 2, so that a connecting plug 62 of the earphone 6 is exposed outside the upper part of the telescopic joint assembly 2; and the other end of the earphone cable 61 of the earphone 6 penetrates through the through hole 11 so that an earplug 63 of the earphone 6 is exposed outside the base 1. In the present embodiment, it is preferable that the upper end of the earphone cable 61 penetrates from any position on the upper joint set 21", so that the connecting plug 62 is exposed outside the upper joint set 21" and easily inserted into the mobile phone 10. The mobile phone 10 is clamped on the adjustable clamp 3, and the connecting plug 62 is directly inserted into the mobile phone 10 when the earphone needs to be used.

In general, when the earphone needs to be used, an additional earphone needs to be found to be connected with the mobile phone 10 for use. Sometimes the earphone is forgotten and cannot be used, great inconvenience is brought to the user, the earphone occupies space, and the phenomenon that the earphone cable 61 is disordered often occurs. In the embodiment, the earphone cable 61 is stored in the intelligent arm, and the connecting plug 62 of the earphone cable 61 is exposed outside the upper part of the telescopic joint assembly 2, so that the connecting plug 62 can be inserted into the mobile phone 10. Meanwhile, the earplug 63 is exposed outside the base 1 so as to be convenient for a user to wear the earplug 63 into the ear, so that the combined use of the earphone 6 and the mobile phone 10 can be realized, and great convenience is brought to the use. Furthermore, there is no effect on the normal use of the smart arm during use of the earphone 6.

In the description above, only the preferred embodiments of the present invention has been described, and the technical scope of the present invention is not limited in any way. Therefore, other structures obtained by adopting the same or similar technical features as those of the above embodiments of the present invention are within the scope of the present invention.

## Claims

1. A freely rotatable and telescopic intelligent arm, **characterized by** comprising a base, a telescopic joint assembly arranged on the base, an adjustable clamp rotatably connected to the telescopic joint assembly, and a fixing device arranged on the base, wherein the telescopic joint assembly comprises at least two joint sets, and two adjacent joint sets are rotatably connected.

2. The freely rotatable and telescopic intelligent arm according to claim 1, **characterized in that** the two adjacent joint sets are connected by a rotating assembly, an end of one joint set of the two joint sets is provided with a U-shaped avoiding slot, and both sides of the U-shaped avoiding slot are respectively formed with a connecting arm; the rotating assembly comprises a pin connected between the connecting arms at the both sides of the U-shaped avoiding slot, and a rotating connection piece sleeved at the periphery of the pin, wherein the rotating connection piece mainly consists of an upper connecting shaft embedded in the U-shaped avoiding slot and sleeved at the periphery of the pin, a connecting turntable formed at a lower end of the upper connecting shaft, and the connecting turntable is rotatably connected to an end of the other joint set of the two joint sets.

3. The freely rotatable and telescopic intelligent arm according to claim 1, **characterized in that** the two joint sets comprise a lower joint set and an upper joint set rotatably connected to an upper end of the lower joint set, and the adjustable clamp is arranged on the upper joint set.

4. The freely rotatable and telescopic intelligent arm according to claim 3, **characterized in that** a side clamping slot for clamping the lower joint set is provided in a side edge of the base, and a cavity penetrating to the outer surface of the base is communicated and arranged at a lower part of the side clamping slot; the lower end of the lower joint set is connected with a swinging connection piece movably embedded in the cavity, the swinging connection piece mainly consists of a circular connecting head movably embedded in the cavity and a connecting column connected between the circular connecting head and the lower end of the lower joint set, and a connecting clamping slot for embedding and swinging the connecting column is formed between the lower part of the side clamping slot and the cavity.

5. The freely rotatable and telescopic intelligent arm according to claim 3, **characterized in that** the adjustable clamp mainly consists of a lower clamping plate and an upper clamping part arranged at an upper end of the lower clamping plate, wherein the lower clamping plate and the upper clamping part are combined to form a clamping position; at least one adjusting assembly is connected between the lower clamping plate and the upper clamping part, and comprises an adjusting rod, a spring and a lower limiting piece, wherein the adjusting rod is positioned between the lower clamping plate and the upper clamping part and has an upper end limited in the upper clamping part, the spring is sleeved at the periphery of the adjusting rod, and the lower limiting piece is connected to a lower end of the adjusting rod and abuts against a lower end of the spring; an upper limiting piece abutting against an upper end of the spring is convexly arranged in the lower clamping plate; a strip-shaped sliding slot in which the adjusting rod and the spring are embedded is formed in the lower clamping plate; the upper limiting piece is an arc-shaped protrusion arranged on an inner wall of an upper part of the strip-shaped sliding slot, and the arc-shaped protrusion is sleeved at the periphery of the adjusting rod and is positioned at the upper end of the spring; the lower limiting piece is a lower nut threadedly connected with a lower end of the adjusting rod; two supporting clamping blocks are convexly arranged in the upper clamping part, and a clamping slot for clamping the adjusting rod is respectively formed in the two supporting clamping blocks; and a limiting nut and an upper nut are threadedly connected with the adjusting rod, the limiting nut is positioned between the two supporting clamping blocks, and the upper nut is threadedly connected with the upper end part of the adjusting rod.

6. The freely rotatable and telescopic intelligent arm according to claim 3, **characterized in that** a rotating chassis is arranged on an end face, close to the adjustable clamp, of the upper joint set, and a meshed rotating shaft meshed with the rotating chassis is convexly arranged in the adjustable clamp; and a rear annular gear tooth is formed on the rotating chassis, and a front annular gear tooth meshed with the rear annular gear tooth is formed on the meshed rotating shaft.

7. The freely rotatable and telescopic intelligent arm according to claim 6, **characterized in that** the upper joint set is provided with a strip-shaped groove on an end face, close to the adjustable clamp, of the upper joint set, a stopper is arranged on a lower part of the strip-shaped groove, a sliding bottom block connected to the stopper is arranged on an upper part of the strip-shaped groove, and a sliding slot is formed on the sliding bottom block, forming a strip-shaped clamping strip on both sides of the sliding slot respectively; and the both side edges of the rotating chassis are respectively formed with a clamping slot for clamping the strip-shaped clamping strip.

8. The freely rotatable and telescopic intelligent arm according to claim 3, **characterized in that** a plurality of middle joint sets are further rotatably connected between the lower joint set and the upper joint set; and the upper joint set, the middle joint set and the lower joint set are respectively connected in a telescopic manner by a plurality of joints.

9. The freely rotatable and telescopic intelligent arm according to claim 1, **characterized in that** the fixing device is a snap-on strap, a magic tape strap or a suction cup.

10. The freely rotatable and telescopic intelligent arm according to claim 1, **characterized in that** a power supply device is arranged in the base, and a charging line of the power supply device sequentially penetrates through the base and the telescopic joint assembly, so that a charging plug of the charging line is exposed outside an upper part of the telescopic joint assembly.

11. The freely rotatable and telescopic intelligent arm according to claim 1, **characterized in that** an earphone is arranged on the base, a through hole is formed in the base, and one end of an earphone cable of the earphone sequentially penetrates through the base and the telescopic joint assembly, so that a connecting plug of the earphone is exposed outside the upper part of the telescopic joint assembly; and the other end of the earphone cable of the earphone penetrates through the through hole so that an earplug of the earphone is exposed outside the base.
